Europäisches Patentamt

European Patent Office

Office européen des brevets

(11) Publication number: **0 166 528**
**B1**

# (12) EUROPEAN PATENT SPECIFICATION

(45) Date of publication of patent specification: **13.06.90**

(21) Application number: **85303715.8**

(22) Date of filing: **28.05.85**

(51) Int. Cl.⁵: **G 05 D 16/06, F 02 M 69/00**

(54) Fuel pressure regulator.

(30) Priority: **21.06.84 US 622954**

(43) Date of publication of application:
**02.01.86 Bulletin 86/01**

(45) Publication of the grant of the patent:
**13.06.90 Bulletin 90/24**

(84) Designated Contracting States:
**DE FR GB IT**

(56) References cited:
DE-A-3 148 978
DE-C- 834 306
FR-A-2 396 908
US-A-3 511 270

PATENT ABSTRACTS OF JAPAN, vol. 8, no. 153
(P-287)1590r, 17th July 1984; & JP - A - 59 50326
(YAMATAKE HONEYWELL) 23-03-1984

The file contains technical information
submitted after the application was filed and
not included in this specification

(73) Proprietor: **GENERAL MOTORS CORPORATION**
**General Motors Building 3044 West Grand**
**Boulevard**
**Detroit Michigan 48202 (US)**

(72) Inventor: **Field, Martin John**
**843 Palmer Road**
**Churchville New York 14428 (US)**

(74) Representative: **Denton, Michael John et al**
**Patent Section - Luton Office (F6) Vauxhall**
**Motors Limited P.O. Box 3 Kimpton Road**
**Luton Bedfordshire LU2 0SY (GB)**

(56) References cited:
**VESTNIK MASHINOSTROENIYA, RUSSIAN**
**ENGINEERING JOURNAL, vol. 56, no. 8, 1976,**
**pages 50-51; V.M. SHPINDLER et al.: "High and**
**low temperature sealing diaphragms"**

Courier Press, Leamington Spa, England.

## Description

This invention relates to a fuel pressure regulator as specified in the preamble of claim 1, for example as disclosed in US-A-3 511 270.

Some fuel injection systems for automotive engines have a plurality of fuel injectors each of which delivers fuel to the inlet port of an associated engine combustion chamber. In some such systems, the fuel injectors are mounted in sockets of a fuel rail which has a passage to supply fuel to the injectors; the fuel rail simplifies installation of the fuel injectors and the fuel supply passage on the engine.

In such systems, a pump supplies more fuel to the fuel supply passage than is required by the injectors, and the excess fuel is discharged through a fuel pressure regulator as disclosed for example in the said US-A-3 511 270. In some applications, exemplified by the said US-A-3 511 270, the pressure regulator diaphragm is clamped between a sheet metal cover and a sheet metal base, and the base has a rim which is deformed over a flange of the cover to apply a clamping force to the cover and diaphragm. In other applications, exemplified by US-A-4 436 112, the pressure regulator diaphragm is clamped between a sheet metal cover and a machined base, and screws are employed to clamp the cover and the diaphragm to the base.

Screws are also employed to provide clamping in an arrangement shown in JP-A-5950326. In this arrangement the inner edge of the compression ring engages the diaphragm on compression, causing tearing of the diaphragm. Another arrangement is shown in DE-A-3148978, however no details of this arrangement are given.

The present invention is concerned with providing improved clamping and sealing in a fuel pressure regulator in which the pressure regulator diaphragm is clamped between a sheet metal cover and a machined base, without the use of screws to apply the clamping force.

To this end, a pressure regulator in accordance with the present invention is characterised by the features specified in the characterising portion of claim 1.

In a fuel pressure regulator in accordance with the present invention, the compression ring disposed between the cover and the diaphragm concentrates and maintains the clamping force on a circular area of the diaphragm.

In the drawing:

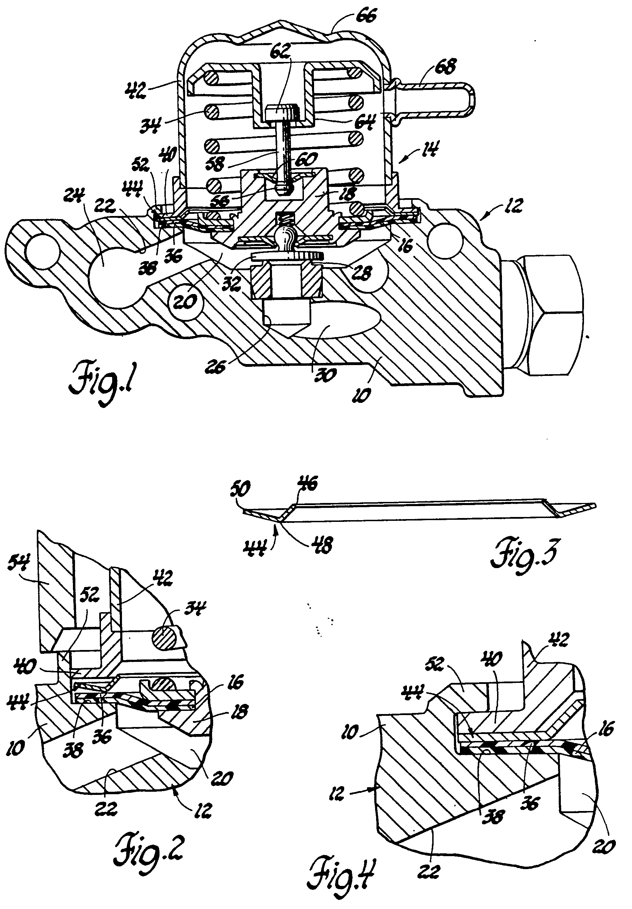

Figure 1 is a fragmentary sectional view, with parts in elevation, showing a portion of a fuel rail including a preferred embodiment of a fuel pressure regulator in accordance with the present invention;

Figure 2 is an exploded view of a portion of the fuel pressure regulator shown in Figure 1;

Figure 3 is a sectional view of a compression ring utilised in the fuel pressure regulator shown in Figures 1 and 2; and

Figure 4 is a sectional view of a portion of the pressure regulator shown in Figure 1, enlarged to show details of the construction.

With reference now to the drawing, a body 10 of an extruded fuel rail 12 is machined to form a base for a fuel pressure regulator 14. The pressure regulator 14 has a pair of diaphragms 16 which overlie one another to form a single diaphragm unit, and are clamped to and carry a central diaphragm retainer plate 18.

A fuel chamber 20 is formed between the diaphragms 16 and the body (base) 10. The chamber 20 has a fuel access region 22 opening from a fuel supply passage 24, and a fuel outlet 26 opening through a valve seat 28 to a fuel return passage 30.

The diaphragm retainer plate 18 carries a valve member 32 which co-operates with the valve seat 28, and a spring 34 biases the diaphragms 16 to engage the valve member 32 with the valve seat 28. The pressure regulator 14 controls fuel flow past the valve seat 28 to balance the fuel pressure in the chamber 20 on the diaphragms 16 with the bias of the spring 34, to thereby maintain a substantially constant fuel pressure in the chamber 20 and thus in the fuel supply passage 24.

The diaphragms 16 have an annular sealing region 36 disposed between an annular clamping surface 38 formed in the body 10 and an annular flange 40 of a cover 42. A compression ring 44 is sandwiched between the flange 40 and the diaphragm sealing region 36. The compression ring 44 has a free inner edge 46, a circular intermediate area 48 engaging the diaphragm sealing region 36, and an outer edge 50 engaging the annular flange 40. The inner edge 46 of the compression ring 44 is spaced both from the diaphragms 16 and from the cover 42.

The body 10 has a rim 52 surrounding and extending axially from the annular clamping surface 38. The rim 52 is staked over the annular flange 40 — for example by means of the staking tool 54 shown in Figure 2 - to cause the annular flange 40 to clamp the diaphragm sealing region 36 against the clamping surface 38. The flange 40 engages the outer edge 50 of the compression ring 44, so distorting the compression ring and causing the compression ring to concentrate the clamping effort of the flange 40 in the intermediate area 48 of the compression ring. The compression ring 44 is thereby effective to concentrate the clamping effort of the flange 40 on a circular area of the diaphragm sealing region 36.

The concentrated clamping effort ensures a proper seal between the diaphragm sealing region 36 and the clamping surface 38. The compression ring 44 is also effective to maintain the clamping effort in the event that the staking force of the rim 52 relaxes in the course of time.

A bead 56 on a tie rod 58 is captured by a ring 60 secured to the diaphragm retainer plate 18, and a head 62 of the tie rod 58 is captured behind a spring seat 64. The tie rod 58 thus limits movement of the spring seat 64 away from the diaphragm retainer plate 18, to simplify assembly of the pressure regulator 14.

An end 66 of the cover 42 overlies the spring seat 64 and is axially deformable to move the spring seat 64 away from the tie rod head 62 towards the diaphragm retainer plate 18; the spring 34 is thereby compressed to increase the bias on the diaphragms 16 and thus increase the fuel pressure in the chamber 20 and the supply passage 24.

A hose is connected between a fitting 68 on the cover 42 and the engine induction system to vent the interior of the cover 42.

## Claims

1. A fuel pressure regulator comprising a pressure regulator base (10) having an annular clamping surface (38), a pressure regulator diaphragm (16) having an annular sealing region (36) overlying the clamping surface (38), and a cover (42) having an annular flange (40) overlying the sealing region (36), the base (10) having a rim (52) surrounding and extending axially from the clamping surface (38), and the rim (52) being staked over the flange (40) to cause the flange (40) to clamp the diaphragm sealing region (36) against the annular clamping surface (38), characterised in that an annular compression ring (44) is disposed between the flange (40) and the diaphragm sealing region (36), and in that the compression ring (44) is substantially V-shaped in cross-section to define an inner edge (46) spaced from the diaphragm (16), a circular intermediate area (48) engaging a circular area of the diaphragm sealing region (36), and an outer edge (50) engaging the flange (40), the outer edge being axially displaced from the circular intermediate area in the free state of the compression ring, the compression ring (44) thereby being effective to concentrate the clamping effort of the flange (40) on the circular area of the diaphragm sealing region (36).

2. A fuel pressure regulator according to claim 1, characterised in that the inner edge of the compression ring (44) comprises a free inner edge (46) which is spaced from the diaphragm (16) and from the cover (42).

## Patentansprüche

1. Brennstoffdruckregler mit einem Druckreglergrundteil (10) mit einer ringförmigen Klemmfläche (38), einer Druckreglermembran (16) mit einem über der Klemmfläche (38) liegenden ringförmigen Abdichtbereich (36) und einer Abdeckung (42) mit einem über dem Abdichtbereich (36) liegenden ringförmigen Flansch (40), wobei das Grundteil (10) eine Einfassung (52) aufweist, die die Klemmfläche (38) umgibt und sich von dieser aus axial erstreckt, und wobei die Einfassung (52) über den Flansch (40) umgeschlagen ist, um durch den Flansch (40) ein Festklemmen des Abdichtbereiches (36) der Membran an der ringförmigen Klemmfläche (38) zu bewirken, dadurch gekennzeichnet, daß ein ringförmiger Kompressionsring (44) zwischen dem Flansch (40) und dem Abdichtbereich (36) der Membran angeordnet ist, und daß der Kompressionsring (44) im Querschnitt im wesentlichen V-förmig ist, um eine von der Membran (16) beabstandete Innenkante (46), einen kreisförmigen Zwischenabschnitt (48), der an einem kreisförmigen Abschnitt des Abdichtbereiches (36) der Membran anliegt, und eine Außenkante (50) zu definieren, die an dem Flansch (40) anliegt, wobei die Außenkante im unbelasteten Zustand des Kompressionsringes gegenüber dem kreisförmigen Zwischenabschnitt axial versetzt ist, so daß der Kompressionsring (44) dadurch eine Konzentrierung der Klemmwirkung des Flansches (40) auf den kreisförmigen Abschnitt des Abdichtbereiches (36) der Membran bewirkt.

2. Brennstoffdruckregler nach Anspruch 1, dadurch gekennzeichnet, daß die Innenkante des Kompressionsrings (44) eine freie Innenkante (46) umfaßt, die von der Membran (16) und von der Abdeckung (42) beabstandet ist.

## Revendications

1. Régulateur de pression decarburant, comprenant une base de régulateur de pression (10) comportant une surface annulaire de serrage (38), un diaphragme de régulateur de pression (16), comportant une partie annulaire d'étanchéité (36) située au-dessus de cette surface de serrage (38), et un couvercle (42) comportant une collerette annulaire (40) située au-dessus de cette partie d'étanchéité (36), la base (10) comportant un rebord (52) entourant la surface de serrage (38) et s'étendant axialement à partir de celle-ci et le rebord (52) étant rabattu par-dessus la collerette (40) de façon à faire serrer à celle-ci la partie d'étanchéité (36) du diaphragme sur la surface annulaire de serrage (38), caractérisé en ce qu'un anneau de compression (44), de forme annulaire, est disposé entre la collerette (40) et la partie d'étanchéité (36) du diaphragme et en ce que cet anneau de compression (44) est sensiblement en forme de V en section transversale, de façon à constituer un bord intérieur (46), espacé par rapport au diaphragme (16), une zone intermédiaire circulaire (48), située au contact d'une zone circulaire de la partie d'étanchéité (36) du diaphragme, et un bord extérieur (50) situé au contact de la collerette (40), ce bord extérieur étant décalé, dans le sens axial, par rapport à la zone intermédiaire circulaire à l'état libre de l'anneau de compression, cet anneau de compression (44) servant ainsi à concentrer l'effort de serrage de la collerette (40) sur la zone circulaire de la partie d'étanchéité (36) du diaphragme.

2. Régulateur de pression de carburant suivant la revendication 1, caractérisé en ce que le bord intérieur de l'anneau de compression (44) est constitué par un bord intérieur libre (46) qui est espacé par rapport au diaphragme (16) et par rapport au couvercle (42).

Fig.1

Fig.2

Fig.3

Fig.4